# EUROPEAN PATENT APPLICATION

(11) **EP 4 741 969 A1**
(43) Date of publication of application: **13.05.2026**
(21) Application number: 24851021.6
(22) Date of filing: 07.08.2024
(51) Int. Cl.: G05D 1/00, G01C 21/16, G01S 19/49, G01S 19/48

(54) **METHOD FOR ORIENTATING SELF-MOVING DEVICE, SELF-MOVING DEVICE, AND STORAGE MEDIUM**

(30) Priority: 07.08.2023 CN 202310996617
(71) Applicant: Shenzhen Mammotion Innovation Co., Limited, Shenzhen, Guangdong 518000 (CN)
(72) Inventor: WEI, Jidong, Shenzhen, Guangdong 518000 (CN); WANG, Kai, Shenzhen, Guangdong 518000 (CN); HE, Zijun, Shenzhen, Guangdong 518000 (CN)
(74) Representative: Huang, Liwei
(86) International application number: PCT/CN2024/110273
(87) International publication number: WO 2025/031376

(57) **Abstract**

The present invention provides a method for orienting an autonomous mobile device, autonomous mobile device, and storage medium. The method comprises: in response to a first positioning signal of the autonomous mobile device being restored, controlling the autonomous mobile device to move linearly along a first direction, and recording a corresponding first displacement length corresponding to a linear movement along the first direction; in response to the autonomous mobile device encountering an obstacle during the linear movement along the first direction, and the first displacement length being less than a first preset displacement length, controlling the autonomous mobile device to move linearly along a second direction, wherein the second direction is different from the first direction; repeating the foregoing steps until the displacement length corresponding to a current direction of the autonomous mobile device satisfies the first preset displacement length; determining an orientation of the autonomous mobile device according to the first positioning signal.

## Description

### CROSS-REFERENCE TO RELATED APPLICATIONS

The present disclosure claims priority to Chinese Patent Application No. 202310996617.2, filed on August 07, 2023, with the China National Intellectual Property Administration and entitled "Method for Orienting Autonomous Mobile Device, Autonomous Mobile Device, and Storage Medium," the entire contents of which are incorporated herein by reference.

### Technical Field

The present disclosure relates to the field of computer technologies, and in particular, to a method for an orienting autonomous mobile device, an autonomous mobile device, and a non-transitory computer-readable storage medium.

### Background Art

An autonomous mobile device refers to equipment capable of autonomous movement without manual operation, such as: intelligent lawn mowers, robotic vacuum cleaners, etc. In complex operating environments, autonomous mobile devices are susceptible to environmental obstructions that block communication signals. These obstructions comprise, but are not limited to, buildings, trees, hills, tunnels, or other objects and terrains. When the signal between the autonomous mobile device and an external communication system is interrupted, it can result in the loss of positioning information.

To ensure operational efficiency, autonomous mobile devices often continue to move based on the positioning information prior to the loss of the positioning signal. During this movement, the pose information of the device undergoes changes. When communication signals are restored, the device cannot accurately avoid obstacles or adjust its position due to the inability to determine the changes in its pose information, making it difficult to quickly correct its attitude information. This severely impacts operational efficiency. Therefore, it is necessary to propose a method to address the problem of autonomous mobile devices being unable to quickly determine orientation information when communication signals are restored.

### Summary

The present disclosure provides a method for orienting an autonomous mobile device, an autonomous mobile device, and a non-transitory computer-readable storage medium, aiming to enable the autonomous mobile device to quickly determine its orientation when positioning is restored.

According to a first aspect, the present disclosure provides a method for orienting an autonomous mobile device, the method comprising: in response to a first positioning signal of the autonomous mobile device being restored, controlling the autonomous mobile device to move linearly along a first direction, and recording a corresponding first displacement length corresponding to a linear movement along the first direction; in response to the autonomous mobile device encountering an obstacle during the linear movement along the first direction, and the first displacement length being less than a first preset displacement length, controlling the autonomous mobile device to move linearly along a second direction, wherein the second direction is different from the first direction; repeating the foregoing steps until the displacement length corresponding to a current direction of the autonomous mobile device satisfies the first preset displacement length; and determining an orientation of the autonomous mobile device according to the first positioning signal.

According to a second aspect, the present disclosure also provides an autonomous mobile device, comprises a memory and a processor. The memory is configured to store a computer program, and the processor is configured to execute the computer program and, when executing the computer program, implement the steps of the method for orienting an autonomous mobile device provided in any embodiment of the present disclosure.

According to a third aspect, the present disclosure also provides a non-transitory computer-readable storage medium storing a computer program. When the computer program is executed by a processor, the processor is caused to implement the steps of the method for orienting an autonomous mobile device provided in any embodiment of the present disclosure.

The method for an orienting autonomous mobile device, the autonomous mobile device, and the computer-readable storage medium disclosed in the embodiments of the present disclosure can, in response to the first positioning signal of the autonomous mobile device being restored, control the autonomous mobile device to move linearly along a first direction and record a corresponding first displacement length. In response to the autonomous mobile device encounters an obstacle while moving linearly along the first direction, and the first displacement length being less than a first preset displacement length, the autonomous mobile device is controlled to move linearly along a second direction, wherein the second direction is different from the first direction. Further, the above steps may be repeated until the displacement length corresponding to a current direction of the autonomous mobile device satisfies the first preset displacement length. In this way, the orientation of the autonomous mobile device can be determined according to the first positioning signal. The method proposed in the present disclosure can flexibly adjust the traveling direction of the autonomous mobile device based on road conditions when the positioning signal is restored, thereby improving the efficiency of the autonomous mobile device in correcting its attitude information, as well as its positioning performance and operational efficiency in complex environments.

### Brief Description of the Drawings

To more clearly illustrate the technical solutions in the embodiments of the present disclosure, the following briefly introduces the accompanying drawings used in the description of the embodiments. Obviously, the drawings in the following description are some embodiments of the present disclosure. For a person of ordinary skill in the art, other drawings can also be obtained from these drawings without creative effort.
FIG.1 is a schematic flowchart of a method for orienting an autonomous mobile device provided in an embodiment of the present disclosure;
FIG.2 is a schematic flowchart illustrating controlling the autonomous mobile device to move linearly along a first direction provided in an embodiment of the present disclosure;
FIG.3 is a schematic flowchart of determining the first direction provided in an embodiment of the present disclosure;
FIG.4 is a schematic diagram of a scenario for determining the first direction provided in an embodiment of the present disclosure;
FIG.5 is another schematic flowchart of determining the first direction provided in an embodiment of the present disclosure;
FIG.6 is another schematic diagram of a scenario for determining the first direction provided in an embodiment of the present disclosure;
FIG.7 is a schematic diagram of a scenario for implementing a method for orienting an autonomous mobile device provided in an embodiment of the present disclosure;
FIG.8 is a schematic block diagram of an autonomous mobile device provided in an embodiment of the present disclosure.

### Detailed Description of Embodiments

The technical solutions in the embodiments of the present disclosure will be clearly and completely described below in conjunction with the accompanying drawings in the embodiments of the present disclosure. It is apparent that the described embodiments are only a part of the embodiments of the present disclosure, rather than all of them. Based on the embodiments of the present disclosure, all other embodiments obtained by a person of ordinary skill in the art without creative efforts shall fall within the protection scope of the present disclosure.

The flowcharts shown in the accompanying drawings are for exemplary purposes only and are not intended to comprise all content and operations/steps, nor are they required to be executed in the described sequence. For example, some operations/steps may be further decomposed, combined, or partially merged, so the actual execution order may vary depending on the specific circumstances. Additionally, although functional modules are divided in the schematic diagrams of the device, in some cases, the division of modules may different from that shown in the device schematic diagrams.

The term "and/or" used in the specification and the appended claims of the present disclosure refers to any and all possible combinations of one or more of the associated listed items, and comprises such combinations.

Detailed descriptions of some embodiments of the present disclosure are provided below with reference to the accompanying drawings. Where there is no conflict, the embodiments described below and the features in the embodiments may be combined with each other.

To facilitate the understanding of the embodiments of the present disclosure, the following provides a brief explanation of some terms and background related to the embodiments of the present disclosure.

RTK (Real-Time Kinematic) positioning: This is a high-precision Global Navigation Satellite System (GNSS) technology. It is an extension of the Global Positioning System (GPS) and can also be applied to other satellite navigation systems, such as GLONASS and Galileo. RTK positioning achieves high-precision positioning by transmitting GNSS observation data between the receiver and one or more base stations and processing this data in real time. The data exchange between the receiver and the base station enables the receiver to calculate its errors relative to the base station and correct its positioning.

Odometry and IMU (Inertial Measurement Unit) positioning: This is a positioning method that fuses odometry-based positioning with IMU-based positioning. In practical applications, filtering algorithms (such as the Extended Kalman Filter) can be used to integrate the two types of positioning data, leveraging their respective strengths to achieve more accurate and stable positioning results. Odometry provides high-precision positioning in the short term, while the IMU helps correct cumulative errors in odometry. Therefore, long-term stable positioning performance can be achieved through the fusion of odometry and IMU positioning.

In complex operational scenarios, autonomous mobile devices typically rely on RTK (Real-Time Kinematic) positioning to obtain RTK positioning signals, thereby determining their own positioning information. However, during outdoor operations, environmental obstructions to RTK positioning signals are common. Such obstructions comprise, but are not limited to, buildings, trees, hills, tunnels, and other objects or terrains. Consequently, in the aforementioned scenarios, autonomous mobile devices are prone to being unable to perform operational tasks due to poor RTK positioning signals.

To address the aforementioned issues, the autonomous mobile device can perform operations after the loss of the RTK signal through the following steps.

Specifically, when the autonomous mobile device is about to enter an area with poor RTK positioning signals, it can still rely on RTK positioning for localization.

Furthermore, when the autonomous mobile device enters an area with poor RTK positioning signals, it can switch to other positioning methods, such as transitioning from RTK positioning to a fused positioning method based on odometry and IMU. By leveraging the fused positioning of odometry and IMU along with the pose information obtained before the loss of the RTK signal, the autonomous mobile device can continue its operations and calculate its pose information, effectively avoiding the issue of complete loss of positioning information due to poor RTK positioning signals.

When the autonomous mobile device exits an area with poor RTK positioning signals, it can revert to RTK positioning to localize itself and obtain its positional information. However, during the period when the RTK signal was lost, the autonomous mobile device may have continued moving, and factors such as slipping may have caused inaccuracies in the attitude information recorded by the fused odometry and IMU positioning. This can result in the device being unable to accurately adjust its position, thereby hindering swift attitude correction and severely impacting operational efficiency. Therefore, it is necessary to first calibrate the orientation of the autonomous mobile device. Once accurate attitude information is obtained, the device can then be controlled to resume its operations.

Therefore, it is necessary to propose a method for orienting an autonomous mobile device, which enables the autonomous mobile device to quickly determine its own orientation information when the RTK positioning signal is restored.

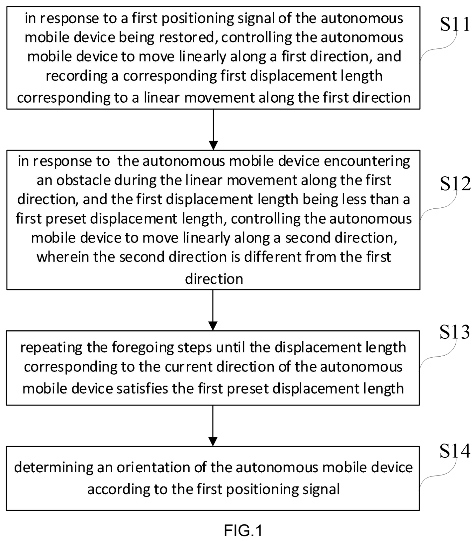

Please refer to FIG.1. FIG.1 is a schematic flowchart of a method for orienting an autonomous mobile device provided in an embodiment of the present disclosure. As shown in FIG.1, the method for orienting the autonomous mobile device comprises steps S11 to S14.

Step S11: in response to a first positioning signal of the autonomous mobile device being restored, controlling the autonomous mobile device to move linearly along a first direction, and recording a corresponding first displacement length corresponding to a linear movement along the first direction.

Here, the first positioning signal is generated in response to a real-time kinematic (RTK) positioning method, that is, it is generated via RTK positioning.

Further, the first direction comprises the current orientation of the autonomous mobile device, and the first displacement length refers to the displacement length of linear movement along the first direction.

Specifically, when the first positioning signal of the autonomous mobile device being restored, the autonomous mobile device can be controlled to move linearly along its current orientation, and the displacement length of linear movement along the current orientation is recorded.

Optionally, in response to the above embodiment, before the first positioning signal of the autonomous mobile device is restored, the method further comprises: when the first positioning signal of the autonomous mobile device is lost, the autonomous mobile device moves based on a second positioning signal.

Here, the second positioning signal is generated in response to odometry and an inertial measurement unit, that is, it is generated via odometry and IMU positioning.

Specifically, before the first positioning signal of the autonomous mobile device is restored, in order to maintain the operation of the autonomous mobile device, a second positioning signal can be generated using odometry and an inertial measurement unit to acquire the pose information of the autonomous mobile device, thereby determining its current orientation. In this way, when the first positioning signal of the autonomous mobile device is subsequently restored, it can be used to confirm the autonomous mobile device's alignment with the current orientation, control it to move linearly, and record the corresponding first displacement length.

In the embodiments of the present disclosure, when the first positioning signal of the autonomous mobile device is restored, the autonomous mobile device can be controlled to move linearly along a first direction, and the corresponding first displacement length can be recorded, so as to determine the orientation of the autonomous mobile device in response to the first displacement length.

Step S12: in response to the autonomous mobile device encountering an obstacle during the linear movement along the first direction, and the first displacement length being less than a first preset displacement length, controlling the autonomous mobile device to move linearly along a second direction, wherein the second direction is different from the first direction.

Here, the obstacle comprises at least one of a physical obstruction, a no-entry zone, and an area boundary.

It should be noted that obstacles comprise buildings, walls, trees, or other objects that block the movement of the autonomous mobile device; no-entry zones are areas where passage is prohibited, such as swimming pools or known areas with poor positioning signals; area boundaries refer to the boundaries of the working area where the autonomous mobile device operates. These boundaries may be physical, such as fences, or virtual, such as boundary lines set by users on a map based on positioning signals, or electromagnetic guide wires pre-laid within the work area. The present disclosure does not impose limitations on this.

It is understandable that when the autonomous mobile device encounters the aforementioned obstacles, it cannot continue moving in the current direction in order to ensure safety, and thus requires redirection to ensure that the autonomous mobile device can continue performing its tasks.

It should be noted that the first preset displacement length is the displacement length that satisfies orientation requirements. The present disclosure does not impose specific limitations on this value, which may, for example, be 1 m, 2 m, etc. In the present disclosure, the first preset displacement length is taken as 1 m for illustrative purposes.

It is understandable that when the autonomous mobile device encounters an obstacle while moving linearly along the first direction, and the first displacement length at that time does not meet the displacement length required for orientation, the autonomous mobile device can be controlled to move linearly along a second direction different from the first direction, so as to continue calibrating the orientation of the autonomous mobile device.

It should be noted that the present disclosure does not impose limitations on the second direction. For example, it may be a random direction or a direction set according to requirements.

Optionally, before controlling the autonomous mobile device to move linearly along the second direction, the method comprises: determining whether the first displacement length is greater than a second preset displacement length, wherein the second preset displacement length is less than the first preset displacement length; and when the first displacement length is greater than the second preset displacement length, determining the second direction as a direction opposite to the first direction.

It should be noted that the present disclosure does not impose limitations on the second preset displacement length. The second preset displacement length should be slightly smaller than the first preset displacement length. For example, when the first preset displacement length is 1 m, the second preset displacement length may be 0.8 m, 0.9 m, etc. In the present disclosure, the second preset displacement length is taken as 0.9 m for illustrative purposes.

Specifically, when the displacement length of the autonomous mobile device moving along the first direction is greater than 0.9 m and less than 1 m, the autonomous mobile device can be controlled to move linearly in the direction opposite to the first direction.

It is understandable that the autonomous mobile device has already traveled 0.9 m linearly in the first direction, which is close to the first preset displacement length of 1 m, meaning that the orientation calibration is nearly complete. At this point, by controlling the autonomous mobile device to move linearly in the direction opposite to the first direction, once the device returns to the starting point along the original path, it only needs to travel an additional 0.1 m in the direction opposite to the first direction to complete the orientation calibration. This approach has a higher success rate, enables faster determination of the autonomous mobile device's position based on known directions, and consequently contributes to accelerating the determination of the autonomous mobile device's orientation. Furthermore, setting the second direction as the opposite of the first direction can prevent the autonomous mobile device from entering an unknown direction and immediately encountering an obstacle, which would otherwise require it to continue moving linearly in other directions to determine its orientation, thereby reducing the efficiency of orientation determination.

In embodiments of the present disclosure, when the autonomous mobile device encounters an obstacle while moving linearly along the first direction and the first displacement length does not satisfy the first preset displacement length, the autonomous mobile device can be controlled to move linearly along a second direction different from the first direction, so as to determine the orientation of the autonomous mobile device. Moreover, when the first displacement length is greater than the second preset displacement length, the second direction can be determined as the direction opposite to the first direction, thereby improving the efficiency of determining the orientation of the autonomous mobile device.

Step S13: Repeating the foregoing steps until the displacement length corresponding to a current direction of the autonomous mobile device satisfies the first preset displacement length.

Step S14: Determining an orientation of the autonomous mobile device according to the first positioning signal.

Specifically, the step of moving linearly along a certain direction may be repeated until the displacement length corresponding to the current direction of the autonomous mobile device meets the displacement length required for orientation, that is, until the displacement length corresponding to the current direction of the autonomous mobile device is greater than the first preset displacement length. At this point, the orientation of the autonomous mobile device can be determined according to the first positioning signal.

It should be noted that the present disclosure does not limit the method for determining the orientation of the autonomous mobile device based on the first positioning signal. For example, the position information corresponding to the start and end points of the linear movement of the autonomous mobile device can be obtained, and based on this, the displacement change information can be determined. Furthermore, the direction of the displacement vector of the autonomous mobile device can be calculated through vector operations to determine its orientation; alternatively, the orientation can be determined by comparing the differences in position coordinates.

In the embodiments of the present disclosure, when the displacement length corresponding to the current direction of the autonomous mobile device satisfies the first preset displacement length, the orientation of the autonomous mobile device can be determined according to the first positioning signal.

The method for orienting the autonomous mobile device disclosed in the embodiments of the present disclosure enables, when the first positioning signal of the autonomous mobile device is restored, control of the autonomous mobile device to move linearly along a first direction and record the corresponding first displacement length. In response to the autonomous mobile device encounters an obstacle while moving linearly along the first direction, and the first displacement length does not satisfy the first preset displacement length, the autonomous mobile device is controlled to move linearly along a second direction, wherein the second direction is different from the first direction. That is, when the autonomous mobile device encounters a first obstacle point in the first direction and the linear displacement length at that time is insufficient to complete the orientation, the first orientation task fails. The autonomous mobile device then changes direction at the first obstacle point from the first direction to the second direction to avoid the first obstacle point, moves linearly in the second direction, and executes a second orientation task.

Optionally, the current direction comprises a third direction. Repeating the above steps until the displacement length corresponding to the current direction of the autonomous mobile device satisfies the first preset displacement length comprises: when the autonomous mobile device encounters an obstacle while moving linearly along the second direction, and the displacement length corresponding to the second direction does not satisfy the first preset displacement length, then controlling the autonomous mobile device to move linearly along the third direction until the displacement length corresponding to the third direction of the autonomous mobile device satisfies the first preset displacement length, wherein the third direction is different from both the second direction and the direction opposite to the second direction.

Specifically, the aforementioned steps may be repeated. That is, when the autonomous mobile device is moving linearly along the second direction and encounters a second obstacle point, and the linear displacement length at that time is insufficient to complete the orientation, the autonomous mobile device is controlled to change direction at the second obstacle point from the second direction to a third direction in order to avoid the second obstacle point, move linearly along the third direction, and perform a third orientation task, wherein the third direction is different from the second direction.

Preferably, the third direction is also different from the opposite direction of the second direction. After the autonomous mobile device changes direction from the first direction to the second direction upon encountering the first obstacle point while moving linearly along the first direction, and subsequently encounters the second obstacle point while moving linearly along the second direction, it changes direction again to the third direction. The purpose is to continue linear displacement and perform a third orientation task. In this scenario, the linear displacement of the autonomous mobile device in the second direction actually corresponds to moving from the first obstacle point to the second obstacle point. Therefore, ensuring that the third direction is different from the opposite direction of the second direction can effectively prevent the autonomous mobile device from returning from the second obstacle point back to the first obstacle point, thereby improving the efficiency of the orientation process for the autonomous mobile device.

Furthermore, the autonomous mobile device is controlled to perform linear movement until the displacement length corresponding to the current direction satisfies the first preset displacement length. In this way, the orientation of the autonomous mobile device can be determined according to the first positioning signal. The method proposed in the present disclosure enables, when the first positioning signal of the autonomous mobile device is restored, rapid determination of the orientation of the autonomous mobile device based on the displacement length during its linear movement, thereby improving the positioning performance of the autonomous mobile device in complex environments.

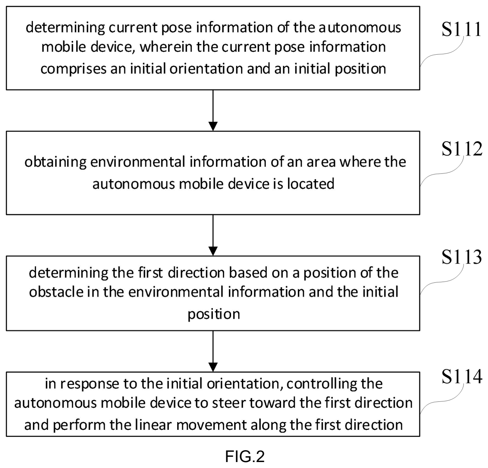

Please refer to FIG.2, which is a schematic flowchart illustrating the control of a autonomous mobile device to move linearly along a first direction, as provided in an embodiment of the present disclosure. As shown in FIG.2, the control of the autonomous mobile device to move linearly along the first direction can be achieved through steps S111 to S114.

Step S111: Determining current pose information of the autonomous mobile device, wherein the current pose information comprises an initial orientation and an initial position.

It should be noted that the method for determining the current pose information of the autonomous mobile device is not limited in the present disclosure. For example, it may be determined via the first positioning signal or via the second positioning signal.

Here, the current pose information may refer to the pose information of the autonomous mobile device at the time the first signal is restored, that is, the initial orientation and initial position at the time of the first signal restoration. Specifically, the initial orientation is the orientation of the autonomous mobile device at the time the first signal is restored, and the initial position is the location of the autonomous mobile device at the time the first signal is restored.

Optionally, determining the current pose information of the autonomous mobile device comprises: when the first positioning signal of the autonomous mobile device is restored, controlling the autonomous mobile device to move linearly based on its current orientation and recording a corresponding second displacement length; and when the second displacement length reaches a third preset displacement length, determining the current pose information of the autonomous mobile device according to the first positioning signal; wherein the third preset displacement length is less than the first preset displacement length.

It should be noted that the present disclosure does not impose limitations on the third preset displacement length. For example, the third preset displacement length is less than the first preset displacement length and less than the second preset displacement length. For instance, when the first preset displacement length is 1 m and the second preset displacement length is 0.9 m, the third preset displacement length may be 0.5 m, 0.6 m, etc. In the present disclosure, the third preset displacement length is taken as 0.5 m for illustrative purposes.

Specifically, when the first positioning signal of the autonomous mobile device is restored, the autonomous mobile device can be controlled to move linearly based on its current orientation, and the corresponding second displacement length can be recorded. When the second displacement length exceeds 0.5 m, the current pose information of the autonomous mobile device can be determined according to the first positioning signal.

It should be noted that the initial position determined at this point in response to the first positioning signal is relatively accurate, whereas due to the short second displacement length, the obtained initial orientation is a rough one-that is, there may be a certain deviation between the initial orientation and the actual orientation.

It is understandable that, although the initial orientation determined in response to the first positioning signal may have a certain error, because the initial orientation is obtained based on the first signal within a relatively short movement distance, the influence of this error can be mitigated to some extent by combining the initial orientation with the initial position, thereby making the resulting current pose information more reliable.

Furthermore, the method for determining the initial orientation of the autonomous mobile device in response to the first positioning signal is not limited in the present disclosure. For example, the direction of the displacement vector of the autonomous mobile device may be calculated through vector operations to determine its initial orientation; alternatively, the initial orientation may be determined by comparing differences in position coordinates. Further, once the position at the end of the movement of the autonomous mobile device is obtained, the initial position of the autonomous mobile device can be determined based on the second displacement length. In this way, the pose information of the autonomous mobile device can be determined in response to the first positioning signal.

Optionally, determining the current pose information of the autonomous mobile device comprises: when the first positioning signal is absent, determining the current pose information of the autonomous mobile device via a second positioning signal, wherein the second positioning signal is generated by an auxiliary positioning unit within the autonomous mobile device.

Specifically, when the first positioning signal is absent, the initial position and initial orientation of the autonomous mobile device can also be directly determined via the second positioning signal. Here, the second positioning signal is generated by an auxiliary positioning unit within the autonomous mobile device. Thus, the current pose information of the autonomous mobile device can be determined using the second positioning signal generated by the auxiliary positioning unit.

It should be noted that the present disclosure does not impose limitations on the auxiliary positioning unit. For example, the auxiliary positioning unit may comprise an odometer and an inertial measurement unit, an accelerometer positioning unit, a gyroscope positioning unit, a vision sensor unit, etc. In the present disclosure, the auxiliary positioning unit is described by taking an odometer and an inertial measurement unit as an example.

Furthermore, although the initial position and initial orientation determined in response to the second positioning signal may contain errors, they still possess a certain degree of reliability. Therefore, the second positioning signal generated by the odometer and the inertial measurement unit enables the determination of the current pose information of the autonomous mobile device even when the first positioning signal is absent. Moreover, after the first positioning signal is restored, it can assist the autonomous mobile device in selecting a feasible direction during the orientation process, thereby enhancing the positioning robustness of the autonomous mobile device.

It should be understood that the current pose information determined in response to the first positioning signal over a short displacement and the current pose information determined in response to the auxiliary positioning unit may both have errors compared to the true orientation of the autonomous robot, yet they still possess a certain degree of reliability. Compared with randomly determined travel directions, utilizing the current pose information that may contain errors can effectively assist the autonomous mobile device in evaluating feasible directions, thereby improving the efficiency of orientation for the autonomous mobile device.

In embodiments of the present disclosure, the current pose information of the autonomous mobile device can be determined via the first positioning signal or the second positioning signal, so as to control the autonomous mobile device to move linearly along the first direction in response to the current pose information.

Step S112: Obtaining environmental information of an area where the autonomous mobile device is located based on an initial position.

Step S113: Determining the first direction according to a position of the obstacle in the environmental information and the initial position.

Step S114: In response to the initial orientation, controlling the autonomous mobile device to steer toward the first direction and perform the linear movement along the first direction.

Here, the environmental information is used to characterize the distribution of obstacles around the autonomous mobile device. It may be obtained based on the location of the autonomous mobile device and an existing map, or acquired through various sensors or vision modules.

Specifically, map information of the current area where the autonomous mobile device is located can be acquired in response to its initial position, and the positions of obstacles in the map information can be determined; alternatively, the positions of obstacles around the autonomous mobile device can be obtained in response to various sensors or vision modules. Therefore, the first direction can be determined in response to the positions of obstacles marked in the environmental information and the initial position of the autonomous mobile device. Subsequently, the autonomous mobile device can be controlled to change from the initial orientation to the first direction and perform linear movement.

It should be noted that the present disclosure does not impose limitations on the method for determining the first direction in response to the positions of obstacles in the environmental information and the initial position of the autonomous mobile device. For example, a direction away from the obstacles may be taken as the first direction, thereby enabling control of the autonomous mobile device to change from the initial orientation to the first direction and perform linear movement.

In embodiments of the present disclosure, the first direction can be determined in response to the initial position and the positions of obstacles in the environmental information, and the autonomous mobile device can thereby be controlled to change from the initial orientation to the first direction and perform linear movement. Since the positions of obstacles in the environmental information are taken into account, potential collision risks can be avoided, and the efficiency of determining the orientation of the autonomous mobile device is improved.

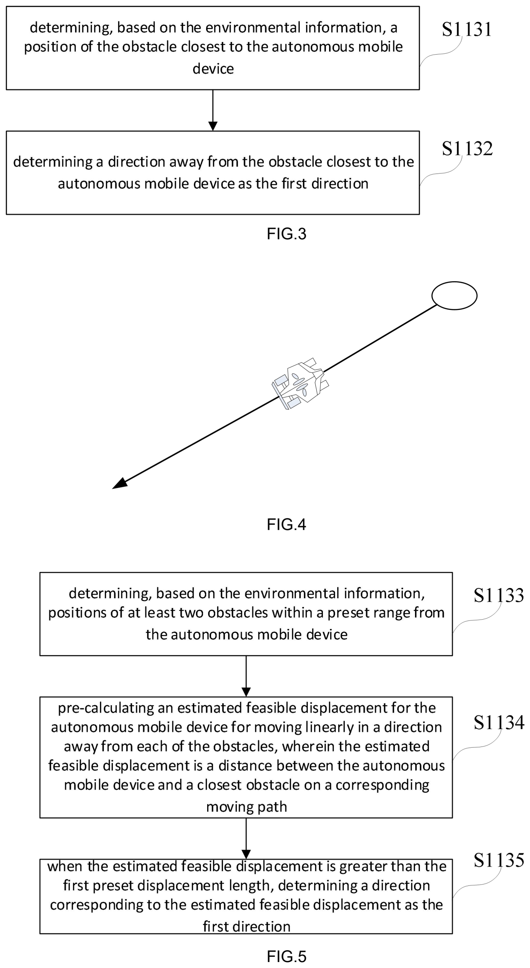

Please refer to FIG.3 and FIG.4. FIG.3 is a schematic flowchart illustrating the determination of the first direction provided in an embodiment of the present disclosure; FIG.4 is a schematic diagram of a scenario for determining the first direction provided in an embodiment of the present disclosure. As shown in FIG.3, the first direction can be determined according to the positions of obstacles in the environmental information and the initial position through steps S1131 to S1132.

Step S1131: Determining, based on the environmental information, a position of the obstacle closest to the autonomous mobile device.

Step S1132: Determining a direction away from the obstacle closest to the autonomous mobile device as the first direction.

It should be noted that the present disclosure does not impose limitations on the direction away from the nearest obstacle, which may, for example, be any direction that is not toward the obstacle.

Preferably, the opposite direction of the obstacle is determined as the first direction. In this way, the direction of linear movement for the autonomous mobile device can be determined more quickly, avoiding unnecessary detours for the autonomous mobile device.

As shown in FIG.4, there are two obstacles represented by elliptical shapes around the autonomous mobile device. Accordingly, the position of the obstacle nearest to the autonomous mobile device can be determined, and the direction in which the autonomous mobile device moves away from the nearest obstacle is defined as the first direction, that is, the direction indicated by the arrow in the figure.

In embodiments of the present disclosure, the direction in which the autonomous mobile device moves away from the nearest obstacle can be determined as the first direction, in order to control the autonomous mobile device to perform linear movement in response to the first direction, and thereby determine the orientation of the autonomous mobile device.

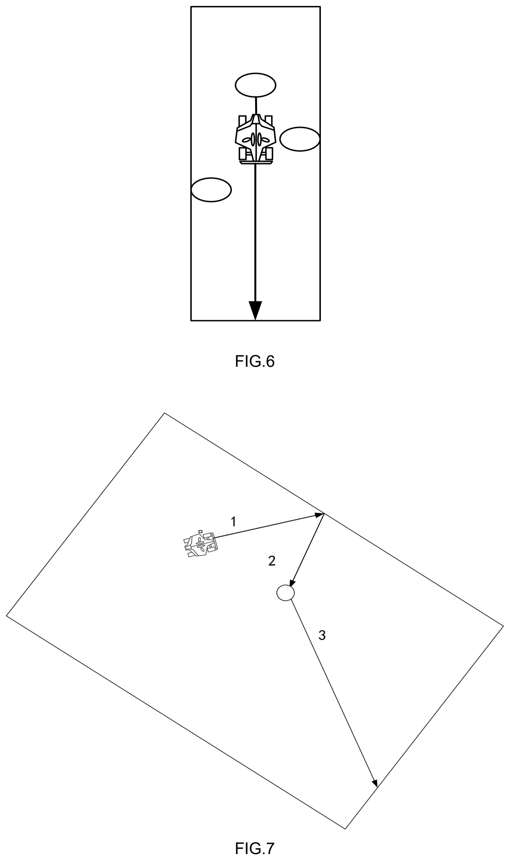

Please continue to refer to FIG.5 and FIG.6. FIG.5 is another schematic flowchart illustrating the determination of the first direction provided in an embodiment of the present disclosure; FIG.6 is another schematic diagram of a scenario for determining the first direction provided in an embodiment of the present disclosure. As shown in FIG.5, the first direction can be determined in response to the positions of obstacles in the environmental information and the initial position through steps S1133 to S1135.

Step S1133: Determining, based on the environmental information, positions of at least two obstacles within a preset range of the autonomous mobile device.

Step S1134: Pre-calculating an estimated feasible displacement for the autonomous mobile device for moving linearly in a direction away from each of the obstacles, wherein the estimated feasible displacement is a distance between the autonomous mobile device and a closest obstacle on a corresponding moving path.

Step S1135: when the estimated feasible displacement is greater than the first preset displacement length, determining a direction corresponding to the estimated feasible displacement as the first direction.

Specifically, when there are multiple obstacles around the autonomous mobile device, the positions of at least two obstacles within a preset range of the autonomous mobile device can be determined in response to the environmental information. Subsequently, an estimated feasible displacement for the autonomous mobile device moving linearly in a direction away from each obstacle is precalculated, and when the estimated feasible displacement satisfies the displacement length required for orientation, the direction corresponding to the estimated feasible displacement is determined as the first direction.

As shown in FIG.6, there are three obstacles represented by elliptical icons around the autonomous mobile device. Therefore, the positions of the three obstacles can be determined in response to the environmental information, and an estimated feasible displacement for the autonomous mobile device moving linearly in a direction away from each obstacle can be precalculated. When the estimated feasible displacement satisfies the displacement length required for orientation, the direction corresponding to the estimated feasible displacement is determined as the first direction, which is also the direction indicated by the arrow in FIG.6.

Preferably, the direction opposite to the obstacle is determined as the direction away from the obstacle. Furthermore, an estimated feasible displacement for the autonomous mobile device moving linearly in the direction opposite to the nearest obstacle can be precalculated, and it is determined whether the estimated feasible displacement is greater than the first preset displacement length. When the estimated feasible displacement is not greater than the first preset displacement length, the direction opposite to the second nearest obstacle is precalculated, and this process continues until the first direction is determined. In this way, the efficiency of determining the first direction can be improved through iterative computation.

Furthermore, when the autonomous mobile device is in a narrow space formed by multiple obstacles, there is only one path through which the autonomous mobile device can pass. Therefore, when the orientation of the autonomous mobile device is inaccurate, the autonomous mobile device can be guided out of the narrow space in response to the direction in which it moves away from each obstacle.

Specifically, when the orientation of the autonomous mobile device is inaccurate, multiple obstacles around the autonomous mobile device can be determined, and the estimated feasible displacement for the autonomous mobile device moving linearly in a direction away from each obstacle is precalculated in order of increasing distance. When the estimated feasible displacement satisfies the displacement length required for orientation, the direction corresponding to the estimated feasible displacement is determined as the first direction, and the autonomous mobile device is controlled to move linearly along the first direction, thereby achieving the determination of the orientation of the autonomous mobile device. Consequently, the movement of the autonomous mobile device can be controlled in response to its orientation, enabling the autonomous mobile device to escape from the narrow space.

In embodiments of the present disclosure, the positions of at least two obstacles within a preset range of the autonomous mobile device can be determined in response to the environmental information. Subsequently, an estimated feasible displacement for the autonomous mobile device moving linearly in a direction away from each obstacle can be precalculated, and the first direction can be determined in response to the estimated feasible displacement, which is then used to control the autonomous mobile device to perform linear movement in response to the first direction, thereby determining the orientation of the autonomous mobile device.

Please continue to refer to FIG.7, which is a schematic diagram of a scenario illustrating a method for orienting an autonomous mobile device provided in an embodiment of the present disclosure. As shown in FIG.7, when the first positioning signal of the autonomous mobile device is restored, the autonomous mobile device can move linearly in the first direction corresponding to Path 1 and record the corresponding first displacement length. In response to the autonomous mobile device encounters an obstacle while moving linearly along the first direction, and the first displacement length does not satisfy the first preset displacement length, the autonomous mobile device is controlled to move linearly in the second direction corresponding to Path 2. Here, the second direction is different from the first direction. The second direction may be a random direction or the direction opposite to the obstacle. Furthermore, when the autonomous mobile device encounters an obstacle represented by an elliptical icon in the second direction, and the displacement length corresponding to the second direction does not satisfy the first preset displacement length, the autonomous mobile device can be controlled to move linearly in the third direction corresponding to Path 3. Here, the third direction may be a random direction that is different from both the second direction and the direction opposite to the second direction. At this point, the displacement length corresponding to the third direction of the autonomous mobile device satisfies the first preset displacement length; consequently, the orientation of the autonomous mobile device can be determined in response to the first positioning signal.

It should be understood that when the autonomous mobile device restores the first positioning signal and determines the first direction, the direction it is randomly facing may be taken as the first direction, or a relatively feasible first direction may be determined in response to the environmental information at the time the signal is restored. When the autonomous mobile device encounters an obstacle point during linear movement along the first direction, the second direction can be flexibly selected in response to the displacement length traveled by the autonomous mobile device along the first direction or the surrounding environment. For example, the direction opposite to the first direction may be taken as the second direction; alternatively, the device may rotate by a preset angle in a preset direction to define the second direction; or a feasible direction may be determined in response to the environmental information of the current surroundings of the autonomous mobile device and used as the second direction. In other words, after the autonomous mobile device restores the first positioning signal or encounters an obstacle object, in order to calibrate its orientation information, the autonomous mobile device continuously determines a direction in response to its current position and moves linearly in response to the determined direction until the orientation calibration is completed.

The method of the present disclosure can be applied in numerous general-purpose or specialized computing system environments or configurations. Examples comprise personal computers, server computers, handheld or portable devices, tablet devices, multiprocessor systems, microprocessor-based systems, set-top boxes, programmable consumer electronic devices, network PCs, minicomputers, mainframe computers, distributed computing environments that comprise any of the above systems or devices, and so forth.

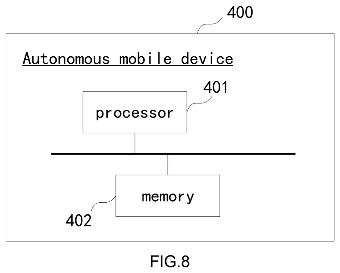

By way of example, the aforementioned method may be implemented in the form of a computer program, which can run on an autonomous mobile device as shown in FIG. 8.

Please refer to FIG. 8, which is a schematic block diagram of an autonomous mobile device provided in an embodiment of the present disclosure. As shown in FIG. 8, the autonomous mobile device 400 comprises a processor 401, a memory 402, and a network interface connected via a system bus. The memory 402 may comprise volatile storage media, non-volatile storage media, and internal memory.

Non-volatile storage media may store an operating system and a computer program. The computer program comprises program instructions, which, when executed, cause the processor 402 to perform any of the methods for orienting an autonomous mobile device.

The processor 401 is configured to provide computing and control capabilities, supporting the operation of the entire autonomous mobile device 400.

The internal memory provides an environment for the execution of the computer program in the non-volatile storage media. When the computer program is executed by the processor, it causes the processor 401 to perform any of the methods for orienting an autonomous mobile device.

The network interface is configured for network communication, such as sending assigned tasks, etc. Those skilled in the art may understand that the structure of the autonomous mobile device 400 is only a block diagram of the partial structure related to the solution of the present disclosure and does not constitute a limitation on the autonomous mobile device to which the solution of the present disclosure is applied. A specific autonomous mobile device may comprise more or fewer components than those shown in the figure, combine certain components, or have a different arrangement of components.

It should be understood that the processor 401 may be a Central Processing Unit (CPU). The processor 401 may also be another general-purpose processor, a Digital Signal Processor (DSP), an Application Specific Integrated Circuit (ASIC), a Field-Programmable Gate Array (FPGA), or other programmable logic devices, discrete gates or transistor logic devices, discrete hardware components, etc. Here, the general-purpose processor may be a microprocessor, or the processor may also be any conventional processor, and so on.

Here, in some embodiments, the processor 401 is configured to execute a computer program stored in the memory 402 to implement the following steps: when a first positioning signal of the autonomous mobile device is restored, controlling the autonomous mobile device to move linearly along a first direction and recording a corresponding first displacement length; when the autonomous mobile device encounters an obstacle while moving linearly along the first direction, and the first displacement length does not satisfy a first preset displacement length, controlling the autonomous mobile device to move linearly along a second direction, wherein the second direction is different from the first direction; repeating the above steps until the displacement length corresponding to a current direction of the autonomous mobile device satisfies the first preset displacement length; and determining an orientation of the autonomous mobile device according to the first positioning signal.

In some embodiments, the processor 401 is further configured to determine whether the first displacement length is greater than a second preset displacement length, wherein the second preset displacement length is less than the first preset displacement length; and when the first displacement length is greater than the second preset displacement length, to determine the second direction as a direction opposite to the first direction.

In some embodiments, the processor 401 is further configured to determine current pose information of the autonomous mobile device, wherein the current pose information comprises an initial orientation and an initial position; acquire environmental information of an area where the autonomous mobile device is located; determine the first direction in response to positions of obstacles in the environmental information and the initial position; and control the autonomous mobile device to turn to the first direction and perform linear movement in response to the initial orientation.

In some embodiments, the processor 401 is further configured to: when the first positioning signal of the autonomous mobile device is restored, control the autonomous mobile device to move linearly in response to a current orientation and record a corresponding second displacement length; and when the second displacement length reaches a third preset displacement length, determine the current pose information of the autonomous mobile device according to the first positioning signal; wherein the third preset displacement length is less than the first preset displacement length.

In some embodiments, the processor 401 is further configured to, when the first positioning signal is absent, determine the current pose information of the autonomous mobile device via a second positioning signal, wherein the second positioning signal is generated by an auxiliary positioning unit within the autonomous mobile device.

In some embodiments, the processor 401 is further configured to: determine, in response to the environmental information, a position of a nearest obstacle to the autonomous mobile device; and define a direction in which the autonomous mobile device moves away from the nearest obstacle as the first direction.

In some embodiments, the processor 401 is further configured to: determine, in response to the environmental information, positions of at least two obstacles within a preset range of the autonomous mobile device; precalculated an estimated feasible displacement for the autonomous mobile device moving linearly in a direction away from each of the obstacles, wherein the estimated feasible displacement is a distance between the autonomous mobile device and a nearest obstacle on its moving path; and when the estimated feasible displacement is greater than the first preset displacement length, determine a direction corresponding to the estimated feasible displacement as the first direction.

In some embodiments, the processor 401 is further configured to: when the autonomous mobile device encounters an obstacle while moving linearly along the second direction, and the displacement length corresponding to the second direction does not satisfy the first preset displacement length, control the autonomous mobile device to move linearly along a third direction until the displacement length corresponding to the third direction of the autonomous mobile device satisfies the first preset displacement length; wherein the third direction is different from both the second direction and the direction opposite to the second direction.

In some embodiments, the processor 401 is further configured to, when the first positioning signal of the autonomous mobile device is lost, control the autonomous mobile device to move in response to the second positioning signal.

It should be noted that the method for orienting an autonomous mobile device proposed in the present disclosure may not only be executed on the aforementioned autonomous mobile device 400 but may also be executed on an independent electronic device, which is not limited in the present disclosure.

Embodiments of the present disclosure also provide a computer-readable storage medium, on which a computer program is stored. The computer program comprises program instructions, which, when executed, implement any method for orienting an autonomous mobile device provided in the embodiments of the present disclosure.

Here, the computer-readable storage medium may be an internal storage unit of the computer device described in the foregoing embodiments, such as a hard disk or memory of the computer device. The computer-readable storage medium may also be an external storage device of the computer device, such as a plug-in hard disk, a Smart Media Card (SMC), a Secure Digital (SD) card, a Flash Card, etc., equipped on the computer device.

Further, the computer-readable storage medium may primarily comprise a program storage area and a data storage area, wherein the program storage area may store an operating system, applications required for at least one function, and the like.

The above description is only specific embodiments of the present disclosure, but the protection scope of the present disclosure is not limited thereto. Any person skilled in the art may easily conceive of various equivalent modifications or substitutions within the technical scope disclosed in the present disclosure, and such modifications or substitutions shall fall within the protection scope of the present disclosure. Therefore, the protection scope of the present disclosure shall be subject to the protection scope of the claims.

## Claims

1. A method for orienting an autonomous mobile device, comprising:
in response to a first positioning signal of the autonomous mobile device being restored, controlling the autonomous mobile device to move linearly along a first direction, and recording a corresponding first displacement length corresponding to a linear movement along the first direction;
in response to the autonomous mobile device encountering an obstacle during the linear movement along the first direction, and the first displacement length being less than a first preset displacement length, controlling the autonomous mobile device to move linearly along a second direction, wherein the second direction is different from the first direction;
repeating the foregoing steps until the displacement length corresponding to the current direction of the autonomous mobile device satisfies the first preset displacement length; and
determining an orientation of the autonomous mobile device according to the first positioning signal.

2. The method according to claim 1, wherein the first direction corresponds to a current orientation of the autonomous mobile device.

3. The method according to claim 1 or 2, wherein before controlling the autonomous mobile device to move linearly along the second direction, the method further comprising:
determining whether the first displacement length is greater than a second preset displacement length, wherein the second preset displacement length is less than the first preset displacement length; and
in response to determining that the first displacement length is greater than the second preset displacement length, determining the second direction to be opposite direction relative to the first direction.

4. The method according to claim 1, wherein controlling the autonomous mobile device to move linearly along the first direction further comprising:
determining current pose information of the autonomous mobile device, wherein the current pose information comprises an initial orientation and an initial position;
obtaining environmental information of an area where the autonomous mobile device is located;
determining the first direction based on a position of the obstacle in the environmental information and the initial position;
in response to the initial orientation, controlling the autonomous mobile device to steer toward the first direction and perform the linear movement along the first direction.

5. The method according to claim 4, wherein determining the current pose information of the autonomous mobile device comprising:
in response to the first positioning signal of the autonomous mobile device being restored, controlling the autonomous mobile device to move linearly in response to a current orientation, and recording a second displacement length corresponding to the linear movement; and
in response to the second displacement length reaches a third preset displacement length, determining the current pose information of the autonomous mobile device based on the first positioning signal; wherein the third preset displacement length being less than the first preset displacement length.

6. The method according to claim 4, wherein determining the current pose information of the autonomous mobile device comprising:
in response to the first positioning signal is absent, determining the current pose information of the autonomous mobile device based on a second positioning signal, wherein the second positioning signal is generated by an auxiliary positioning unit within the autonomous mobile device.

7. The method according to claim 5 or 6, wherein the first positioning signal is generated based on a real-time kinematic (RTK) mode; and the second positioning signal is generated based on an odometer and an inertial measurement unit (IMU).

8. The method according to claim 4, wherein determining the first direction based on the position of the obstacle in the environmental information and the initial position comprising:
determining, based on the environmental information, a position of the obstacle closest to the autonomous mobile device; and
determining a direction away from the obstacle closest to the autonomous mobile device as the first direction.

9. The method according to claim 4, wherein determining the first direction based on the position of the obstacle in the environmental information and the initial position further comprising:
determining, based on the environmental information, positions of at least two obstacles within a preset range from the autonomous mobile device;
pre-calculating an estimated feasible displacement for the autonomous mobile device for moving linearly in a direction away from each of the obstacles, wherein the estimated feasible displacement is a distance between the autonomous mobile device and a closest obstacle on a corresponding moving path; and
when the estimated feasible displacement is greater than the first preset displacement length, determining a direction corresponding to the estimated feasible displacement as the first direction.

10. The method according to claim 1, wherein the current direction comprises a third direction, and repeating the steps until the displacement length corresponding to the current direction of the autonomous mobile device satisfies the first preset displacement length comprising: when the autonomous mobile device encounters the obstacle during linear movement along the second direction, and a displacement length corresponding to the second direction less than the first preset displacement length, controlling the autonomous mobile device to move linearly along the third direction, wherein the third direction is different from the second direction and an opposite direction of the second direction.

11. The method according to any one of claims 1, 4, 8, 9, and 10, wherein the obstacle comprises at least one of a physical obstruction, a no-entry zone, and an area boundary.

12. The method according to claim 6, wherein before the first positioning signal of the autonomous mobile device being restored, the method further comprises: in response to the first positioning signal of the autonomous mobile device being lost, controlling the autonomous mobile device to move according to the second positioning signal.

13. An autonomous mobile device, comprising:
a memory and a processor;
wherein the memory is connected to the processor and configured to store programs; and the processor is configured to execute the programs stored in the memory to implement the steps of the method for orienting the autonomous mobile device according to any one of claims 1 to 12.

14. A non-transitory computer-readable storage medium, wherein the non-transitory computer-readable storage medium stores a computer program, and when the computer program is executed by a processor, the processor is caused to implement the steps of the method for orienting the autonomous mobile device according to any one of claims 1 to 12.
